# EUROPÄISCHE PATENTSCHRIFT

(11) **EP 2 564 283 B1**
(45) Veröffentlichungstag und Bekanntmachung des Hinweises auf die Patenterteilung: **09.04.2014**
(21) Anmeldenummer: 11717493.8
(22) Anmeldetag: 21.04.2011
(51) Int. Cl.: G05D 23/13, F16K 11/044, E03C 1/04, F16K 11/00

(54) **SANITÄRE MISCHBATTERIE, INSBESONDERE FÜR EINE BRAUSEVORRICHTUNG**
SANITARY MIXING UNIT, IN PARTICULAR FOR A SHOWER DEVICE
ROBINET MÉLANGEUR SANITAIRE, EN PARTICULIER POUR UNE DOUCHE

(30) Priorität: 28.04.2010 DE 102010018671
(43) Veröffentlichungstag der Anmeldung: 06.03.2013
(73) Patentinhaber: Grohe AG, 58675 Hemer (DE)
(72) Erfinder: SCHULTE, Michael, 58708 Menden (DE)
(86) Internationale Anmeldenummer: PCT/EP2011/002043
(87) Internationale Veröffentlichungsnummer: WO 2011/134628

(56) Entgegenhaltungen:
- EP-A2- 0 762 029
- EP-A2- 0 774 606
- EP-A2- 1 277 997
- EP-A2- 1 308 565
- EP-A2- 1 690 486
- DE-A1- 19 901 553
- DE-U1- 8 621 093
- GB-A- 2 416 019

## Beschreibung

Die Erfindung betrifft sanitäre Armaturen und insbesondere sanitäre Mischbatterien, wie sie beispielsweise für Duschen mit mehreren Brauseköpfen für unterschiedliche Funktionen Verwendung finden können.

Die erfindungsgemäße sanitäre Mischbatterie dient insbesondere der Aufputz-Montage und weist ein Gehäuse auf. Beispiele für derartige Sanitärarmaturen finden sich unter anderem in EP 0 242 680 B1, DE 198 13 296 A1, DE 103 23 270 A1, DE 103 46 999 A1 und DE 103 58 777 A1.

Die Gehäuse der bekannten Aufputz-Sanitärarmaturen (sanitäre Mischbatterien) weisen einen Kaltwasser- und einen Heißwasseranschluss auf, die in einem genormten Abstand voneinander angeordnet sind. Ferner sind die Gehäuse der bekannten Sanitärarmaturen mit einem Mischwasserauslass versehen, an den beispielsweise ein Brauseschlauch für eine Handbrause anschließbar ist und die als Wannenauslässe ausgebildet sind. In dem Gehäuse einer derartigen Sanitärarmatur befindet sich ein Mischventil, das im Regelfall als Thermostatventil ausgebildet ist. Das Mischventil ist mit Kaltwasser- und Heißwassereinlässen versehen, die sich im Allgemeinen über den gesamten Umfang des Mischventilgehäuses erstrecken. An einem axialen Ende des Mischventilgehäuses befindet sich die Mischwasseraustrittsöffnung. Die Kalt-und Heißwassereintrittsöffnungen des Mischventils stehen mit den Kalt- und Heißwassereinlässen des Gehäuses über in dem Gehäuse ausgebildete Kanäle in Fluidverbindung.

Neben dem manuell betätigbaren Mischventil weisen die bekannten sanitären Mischbatterien auch eine Wasserweg-Umschalteinheit auf, über die das Mischwasser des Mischventils wahlweise zu einem ersten oder zu einem zweiten Mischwasserauslass gelangt. An den ersten Mischwasserauslass, der bereits oben erwähnt ist, ist beispielsweise der Schlauch einer Handbrause angeschlossen, während der zweite Mischwasserauslass als Wannenauslass ausgebildet ist oder aber über eine Leitung mit einer Kopfbrause verbunden ist. Ein Beispiel für eine Zwei-Wege-Umschalteinheit ist in EP 0 801 255 A2 beschrieben.

Mitunter ist es wünschenswert, mit Hilfe einer sanitären Mischbatterie das Mischwasser wahlweise einzeln oder gemeinsam auf mehr als zwei Mischwasserauslässe verteilen zu können. Ein Beispiel für eine derartige Mischbatterie ist eine Brausevorrichtung für eine Dusche, bei der es wünschenswert sein könnte, das Mischwasser zu einer Handbrause und/oder einer Kopfbrause und/oder Seitenbrausen zu leiten. Grundsätzlich ist dies möglich, wenn statt der bekannten Zwei-Wege-Umschalteinheiten Umschalteinheiten für eine Umschaltung auf mehr als zwei Wasserwege verbaut werden. Dies allerdings setzt die Ausbildung weiterer Mischwasserabzweigkanäle o.dgl. in dem Gehäuse der Mischbatterie voraus, wozu im Regelfall kein Bauraum zur Verfügung steht bzw. das Gehäuse großformatiger ausgelegt werden müsste, was wiederum optisch wenig ansprechend ist.

Aufgabe der Erfindung ist es, eine sanitäre Mischbatterie, insbesondere für eine Brausevorrichtung, mit mindestens drei unterschiedlichen Funktionen dienenden Brauseköpfen zu schaffen, bei der die wahlweise Um- bzw. Aufschaltung des Mischwassers auf mehr als drei Mischwasserauslässe bei lediglich geringem konstruktiven Mehraufwand möglich ist.

Zur Lösung dieser Aufgabe wird mit der Erfindung eine sanitäre Mischbatterie, insbesondere für eine Brausevorrichtung, vorgeschlagen, die versehen ist mit
- einem Gehäuse, das einen Kaltwassereinlass, einen Heißwassereinlass und mehrere Mischwasserauslässe aufweist,
- einem Mischventil, das eine in Fluidverbindung mit dem Kaltwassereinlass stehende Kaltwassereintrittsöffnung, eine in Fluidverbindung mit dem Heißwassereinlass stehende Heißwassereintrittsöffnung, einen Ventilkörper zur Veränderung der Querschnittsflächen der Kalt- und Heißwassereintrittsöffnungen zur Erzeugung von Mischwasser und eine Mischwasseraustrittsöffnung aufweist, an die sich ein in dem Gehäuse angeordneter Mischwasserkanal anschließt, und
- einer Mehrwege-Umschalteinheit, die eine über den Mischwasserkanal in Fluidverbindung mit der Mischwasseraustrittsöffnung des Mischventils stehende Eintrittsöffnung und mehrere Austrittsöffnungen, von denen jede mit einem anderen der Mischwasserauslässe des Gehäuses in Fluidverbindung steht, und ein Umschaltorgan zur wahlweisen Fluidverbindung der Eintrittsöffnung mit einer oder mehreren der Austrittsöffnungen der Mehrwege-Umschalteinheit aufweist.

Bei dieser sanitären Mischbatterie ist erfindungsgemäß vorgesehen,
- dass das Gehäuse einen weiteren Mischwasserauslass aufweist,
- dass der zwischen der Mischwasseraustrittsöffnung des Mischventils und der Eintrittsöffnung der Umschalteinheit verlaufende Mischwasserkanal eine Abzweigöffnung aufweist, die in Fluidverbindung mit dem weiteren Mischwasserauslass steht, und
- dass ein Absperrventil zum Öffnen und/oder Schließen des weiteren Mischwasserauslasses vorgesehen ist.

Die erfindungsgemäße sanitäre Mischbatterie weist ein Gehäuse auf, das insbesondere als Aufputz-Gehäuse ausgebildet ist sowie mit einem Kaltwassereinlass, einem Heißwassereinlass und zwei oder mehr Mischwasserauslässen versehen ist. Die Kalt- und Heißwassereinlässe des Gehäuses sind über entsprechende Kanäle mit den Kalt- bzw. Heißwassereinlässen eines Mischventils verbunden. Das Mischventil weist ein (Ventil-)Gehäuse auf, das einen Ventilkörper und eine Mischwasseraustrittsöffnung aufweist. An die Mischwasseraustrittsöffnung schließt sich ein Mischwasserkanal an, der in dem Gehäuse angeordnet ist. Das Mischventil ist im Regelfall als Thermostatventil ausgebildet und weist ein manuell betätigbares Betätigungsorgan auf.

Ferner ist die erfindungsgemäße sanitäre Mischbatterie mit einer Mehrwege-Umschalteinheit versehen, die eine Eintrittsöffnung und mehrere Austrittsöffnungen aufweist. Mit Hilfe eines Umschaltorgans, das manuell durch ein Betätigungsorgan betätigbar ist, lässt sich die Eintrittsöffnung der Umschalteinheit wahlweise mit einer oder mehreren der Austrittsöffnungen in Fluidverbindung bringen. Bei Verwendung der sanitären Mischbatterie für eine Brausevorrichtung kann mit der Mehrwege-Umschalteinheit zwischen beispielsweise einer Handbrause und einer Kopfbrause umgeschaltet werden.

Erfindungsgemäß ist das Gehäuse der sanitären Mischbatterie mit einem weiteren Mischwasserauslass versehen, der mit keiner der Austrittsöffnungen der Mehrwege-Umschalteinheit in Fluidverbindung steht. Dieser weitere Mischwasserauslass steht vielmehr mit dem im Gehäuse angeordneten Mischwasserkanal in Fluidverbindung, indem der Mischwasserkanal in Strömungsrichtung des Mischwassers betrachtet vor der Eintrittsöffnung der Mehrwege-Umschalteinheit eine Abzweigöffnung aufweist, die in Fluidverbindung mit dem weiteren Mischwasserauslass des Gehäuses steht. Damit steht das Mischwasser unabhängig von der Einstellung der Mehrwege-Umschalteinheit stets am weiteren Mischwasserauslass an. Der weitere Mischwasserauslass des Gehäuses lässt sich mit einem manuell zu betätigenden Absperrventil öffnen und schließen. In dem oben erwähnten Beispiel der Verwendung der Mischbatterie für eine Brausevorrichtung kann an den weiteren Mischwasserauslass eine beispielsweise zu Seitenbrauseköpfen führende Leitung angeschlossen werden.

Das Gehäuse der erfindungsgemäßen sanitären Mischbatterie weist nur geringfügige konstruktive Änderungen gegenüber den Gehäusen bekannter sanitärer Mischbatterien mit Wasserwegumschaltung auf zwei oder mehr Mischwasserauslässe auf. So bedarf es lediglich der Ausbildung des Abzweigkanals vom gehäuseinternen Mischwasserkanal zum weiteren Mischwasserauslass. Die gehäuseinternen Kanäle, die zur Mehrwege-Umschalteinheit sowie von dieser weg führen, können im Wesentlichen unverändert bleiben. Durch externe Anordnung des Absperrventils außerhalb des Gehäuses an dem weiteren Mischwasserauslass kann dort in platzsparender Weise das Absperrventil angeordnet werden, ohne in die interne Gehäusekonstruktion einzugreifen. Damit ist mit geringem konstruktivem Aufwand eine sanitäre Mischbatterie geschaffen, die die Umschaltmöglichkeiten des Mischwassers auf eine Anzahl von Mischwasserauslässen ermöglicht, die um eins größer als die Anzahl der über die Mehrwege-Umschalteinheit mit Mischwasser versorgbaren Mischwasserauslässe ist, und damit zur Komfortsteigerung beiträgt.

Wenn die erfindungsgemäße sanitäre Mischbatterie für eine Brausevorrichtung mit einer Kopfbrause und mehreren Seitenbrausen verwendet wird, die ebenfalls für die Aufputz-Montage ausgebildet sind, ist es von Vorteil, wenn einer der über die Mehrwege-Umschalteinheit gesteuerten Mischwasserauslässe sowie der weitere über das Absperrventil gesteuerte Mischwasserauslass in unmittelbarer Nähe zueinander angeordnet sind. Hier bietet es sich an, diese beiden Auslässe mit einer Rohr-in-Rohr-Wasserleitung zu koppeln, deren einer Wasserführungskanal z. B. zur Kopfbrause und deren anderer Wasserführungskanal z. B. zu den Seitenbrausen führt. Insoweit zweckmäßig ist es, wenn die beiden betreffenden Mischwasserauslässe konzentrisch zueinander angeordnet sind oder aber sich der eine Mischwasserauslass zumindest über einen Teilringabschnitt um den anderen Mischwasserauslass herum erstreckt, wobei der sich teilringförmig erstreckende Mischwasserauslass mehrere einzelne Mischwasserauslassöffnungen aufweisen kann, die als Gruppe (teil-)ringförmig um den anderen Mischwasserauslass herum angeordnet sind.

Bei dieser Variante der erfindungsgemäßen Mischbatterie ist der sich (teil-)ringförmig erstreckende Mischwasserauslass mit einem Wasserführungskanal eines Wasserführungselements verbunden, das sich im Wesentlichen C-förmig und damit über z. B. etwa 180° um den zentral angeordneten anderen Mischwasserauslass herum erstreckt. Das Wasserführungselement erstreckt sich dabei zumindest teilweise, nämlich über weniger als 360° bzw. weniger als 270° um das Absperrventil bzw. das Absperrventil-Gehäuse für den zentrisch angeordneten (dritten) Mischwasserauslass oder um ein mit dem Absperrventil und insbesondere mit dessen Absperrkörper in Wirkverbindung stehendes Element.

Bei dieser Weiterbildung der Erfindung ist es von Vorteil, dass sich das manuell betätigbare Verstellorgan des Absperrventils innerhalb des Umfangsbereichs radial vom Absperrventil erstreckt, der durch das vorzugsweise im Wesentlichen C-förmige Wasserführungselement freigelassen ist. Aus ästhetischen Gründen ist es ferner von Vorteil, wenn das Wasserführungselement (und dessen freigelassener Umfangsbereich) von einem Verblendungsring nach außen hin abgedeckt ist. Dieser Verblendungsring weist zweckmäßigerweise im Wesentlichen zylindrische Form auf und steht mit dem radialen Verstellhebel in Verbindung.

Bei einer weiteren vorteilhaften Ausgestaltung der Erfindung ragt der Verstellhebel von einem innenliegenden polygonalen Kopplungs- bzw. Verbindungsabschnitt des Verstellorgans ab, wobei dieser Verbindungsabschnitt mit einer komplementär ausgebildeten Anlagefläche des Absperrkörpers oder eines mit diesem in Wirkverbindung stehenden Bauteils des Absperrventils formschlüssig in Verbindung steht. Der polygonale Verbindungsabschnitt ist zweckmäßigerweise als zylindrischer Innenring mit polygonaler Innenfläche, insbesondere als Innensechskanthülse ausgebildet.

Obwohl im Vorstehenden nicht erwähnt, verfügt die erfindungsgemäße sanitäre Mischbatterie über ein Absperrventil zum Absperren der Wasserzufuhr für beide von der Mehrwege-Umschalteinheit gesteuerten Mischwasserauslässe. Hier kann ein separates Absperrventil mit einem diesem zugeordneten Betätigungsorgan vorgesehen sein. Über dieses Absperrventil ließe sich dann auch die Durchflussmenge steuern.

Vorteilhaft ist es, wenn die Mehrwege-Umschalteinheit neben der Umschaltfunktion auch die Absperr- und Durchflussmengeneinstellfunktion übernimmt. Bei einer vorteilhaften Ausgestaltung der Erfindung lässt sich also das Umschaltorgan der Mehrwege-Umschalteinheit in eine Absperrposition überführen, in der die Eintrittsöffnung der Mehrwege-Umschalteinheit versperrt ist. Beim Herausbewegen des Umschaltorgans aus der Absperrposition wird die Eintrittsöffnung zunächst nur teilweise freigegeben, so dass sich auf diese Art und Weise die Durchflussmenge des Mischwassers einstellen lässt.

Die Erfindung wird nachfolgend anhand eines Ausführungsbeispiels und unter Bezugnahme auf die Zeichnung näher erläutert, wobei von einer sanitären Mischbatterie mit einer Zwei-Wege-Umschalteinheit mit Absperrfunktion ausgegangen wird, über die zwei Mischwasserauslässe gesteuert werden, nämlich ein erster und ein zweiter Mischwasserauslass. Der oben genannte weitere Mischwasserauslass ist nachfolgend mit dritter Mischwasserauslass bezeichnet.

In der Zeichnung ist im Einzelnen dargestellt:
- Fig. 1: eine perspektivische Gesamtansicht einer Brausevorrichtung mit einer sanitären Mischbatterie gemäß einem Ausführungsbeispiel der Erfindung,
- Fig. 2: eine perspektivische Ansicht der Mischbatterie des Systems nach Fig. 1,
- Fig. 3: eine Frontansicht der Mischbatterie,
- Fig. 4: einen Schnitt entlang der Linie IV-IV durch die Mischbatterie gemäß Fig. 3,
- Fig. 5: eine perspektivische Ansicht auf die Mischbatterie ähnlich der Darstellung in Fig. 2 jedoch mit Explosionsdarstellung des Aufbaus des das Absperrventil aufweisenden Aufsatzes,
- Fig. 6: eine Schnittansicht entlang der Linie VI-VI der Mischbatterie gemäß Fig. 3,
- Fig. 7: eine teilweise Vorderansicht auf die Brausevorrichtung gemäß Fig. 1 mit aufgeschnittenem Rohrleitungssystem für die Kopf- und Seitenbrausewasserversorgung,
- Fig. 8: eine vergrößerte Darstellung des Ausschnitts VIII-VIII der Fig. 7 und

Fig. 9 einen Schnitt entlang der Linie IX-IX der Fig. 8.

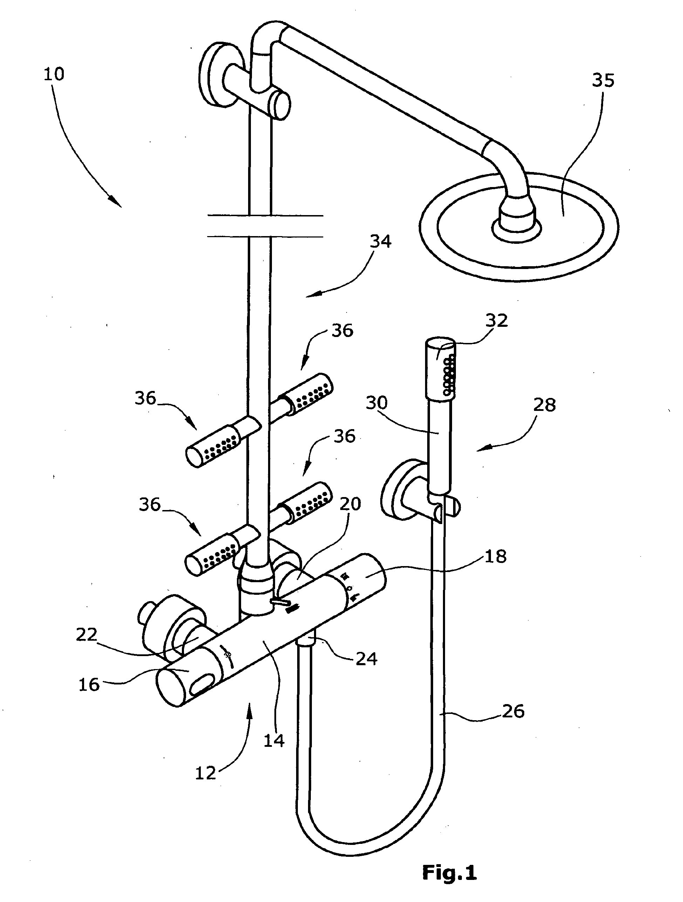

In Fig. 1 ist perspektivisch eine Brausevorrichtung 10 mit einer sanitären Mischbatterie 12 gezeigt, über die sich drei Mischwasserauslässe steuern lassen. Die Mischbatterie 12 weist in diesem Ausführungsbeispiel ein im Wesentlichen zylindrisches Gehäuses 14 auf, an dessen axialen Enden jeweils ein manuelles Betätigungselement 16,18 angebracht ist. Das Betätigungselement 16 dient der Temperatureinstellung des Wassers, während das Betätigungselement 18 eine Wasserabsperr- und -umschaltfunktion hat, was später noch beschrieben wird. Das Gehäuse 14 ist für die Aufputz-Montage ausgelegt und weist einen Kaltwassereinlass 20 sowie einen Heißwassereinlass 22 auf. Ferner weist das Gehäuse 14 einen ersten Mischwasserauslass 24 auf, an dem in diesem Ausführungsbeispiel ein Wasserschlauch 26 angeschlossen ist, der zu einer Handbrause 28 mit Griff 30 und Brausekopf 32 führt. Ferner ist an das Gehäuse 14 der Mischbatterie 12 ein (Doppel-)Rohrleitungssystem 34 angeschlossen, über das Mischwasser von der Mischbatterie 12 wahlweise einzeln oder gemeinsam zu einer Kopfbrause 35 und/oder mehreren Körperbrausen 36 geleitet wird. Das Rohrleitungssystem 34 ist wie die Mischbatterie 12 in diesem Ausführungsbeispiel für die Aufputz-Montage vorgesehen.

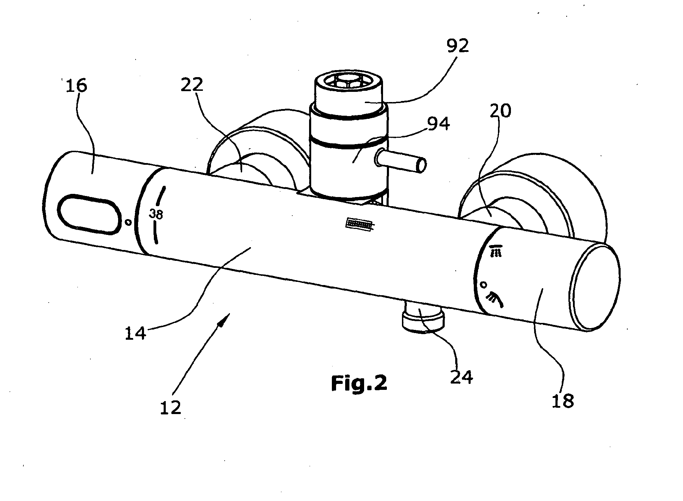

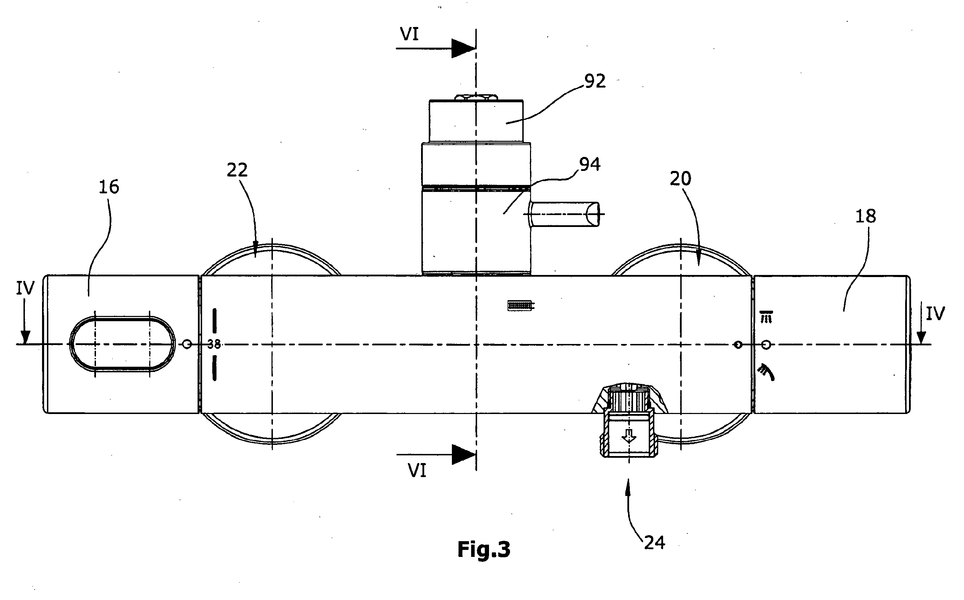

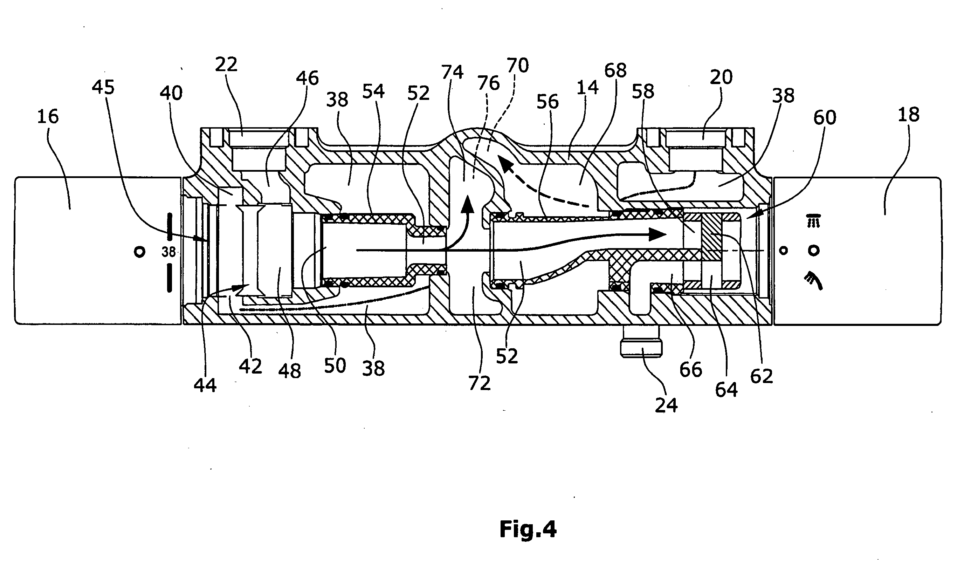

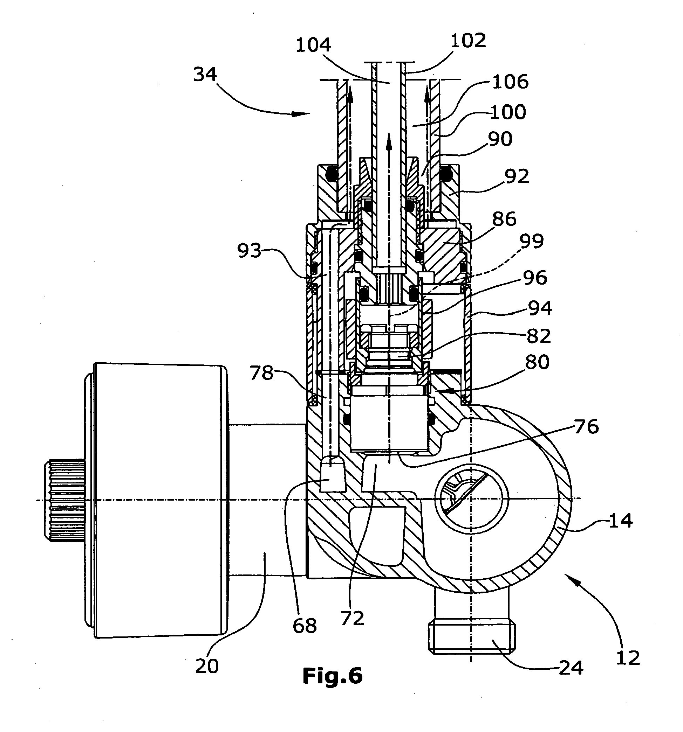

Die sanitäre Mischbatterie ist in verschiedenen Außenansichten in den Fign. 2, 3 und 5 gezeigt. Der interne Aufbau mit der Darstellung der für die Erfindung wesentlichen Wasserführungswege ist in den Schnittansichten gemäß den Fign. 4 und 6 gezeigt.

Gemäß Horizontalschnitt nach Fig. 4 schließt sich an den Kaltwassereinlass 20 innerhalb des Gehäuses 14 ein Kaltwasserkanal 38 an, der in einen Kaltwasserringkanal 40 um die Kaltwassereintrittsöffnung 42 eines als Thermostatventil ausgebildeten Mischventils 44 einmündet, das unter anderem einen Ventilkörper 45 aufweist. Genauso ist der Heißwassereinlass 22 des Gehäuses 14 durch einen in diesem ausgeführten Heißwasserkanal 46 mit der Heißwassereintrittsöffnung 48 des Mischventils 44 verbunden. Das Mischventil 44 weist eine Mischwasseraustrittsöffnung 50 auf, an die sich ein Mischwasserkanal 52 anschließt, der in diesem Ausführungsbeispiel durch zwei Rohre 54,56 gebildet ist und zur Eintrittsöffnung 58 einer Zwei-Wege-Umschalteinheit 60 führt, die ein Umschalt- und Absperrorgan 62 aufweist, dessen Stellung durch das Betätigungselement 18 manuell einstellbar ist.

Die Zwei-Wege-Umschalteinheit 60 weist eine erste Austrittsöffnung 64 sowie eine (nicht dargestellte) zweite Austrittsöffnung auf. Die erste Austrittsöffnung 64 ist über einen Kanal 66 mit dem ersten Mischwasserauslass 24 verbunden, während die zweite Austrittsöffnung der Zwei-Wege-Umschalteinheit 60 über einen ebenfalls im Gehäuse 14 ausgebildeten zweiten Kanal 68 mit einem zweiten Mischwasserauslass 70 verbunden ist. Neben der Umschaltfunktion kommt der Zwei-Wege-Umschalteinheit 60 auch noch eine Absperrfunktion zu, in der entweder die Eintrittsöffnung 58 oder gleichzeitig beide Austrittsöffnungen 64 versperrt bzw. blockiert sind. Im Bereich zwischen den beiden Rohren 54 und 56 des vom Mischventil 44 bis zur Zwei-Wege-Umschalteinheit 60 führenden Mischwasserkanals 52 zweigt über eine Abzweigöffnung 72 ein dritter Kanal 74 ab, der zu einem dritten Mischwasserauslass 76 führt.

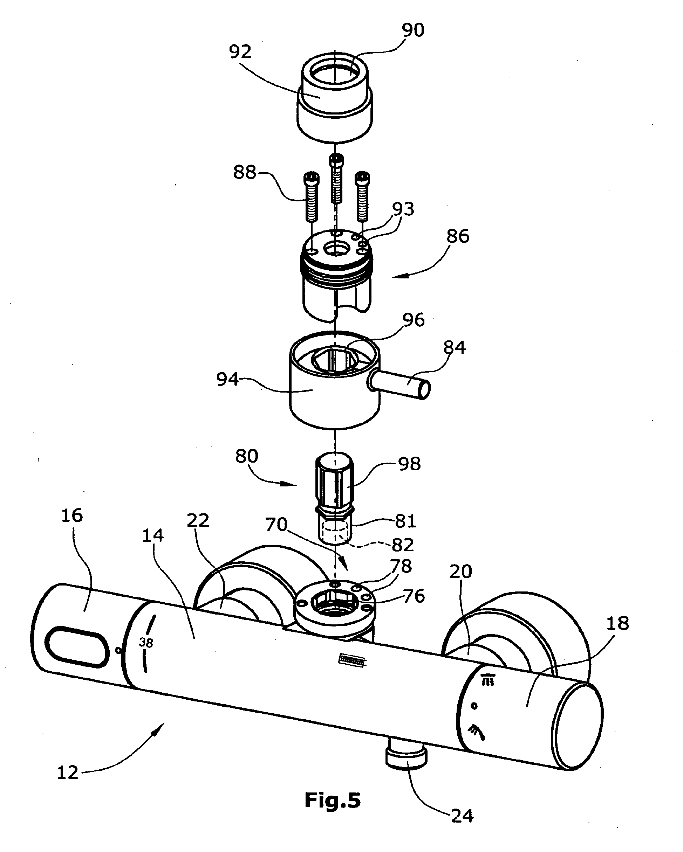

Wie man anhand der Fign. 4 und 5 erkennen kann, sind der zweite und der dritte Mischwasserauslass 70 bzw. 76 in unmittelbarer Nähe zueinander angeordnet. Gemäß Fig. 5 ist der dritte Mischwasserauslass 76 zentrisch angeordnet, während um den dritten Mischwasserauslass 76 herum zwei Bohrungen 78 aus dem Gehäuse 14 herausführen, die in Fluidverbindung mit dem zweiten Mischwasserauslass 70 stehen bzw. diesen bilden. Der dritte Mischwasserauslass 76 lässt sich mit Hilfe eines Absperrventils 80 öffnen oder schließen. Dieses Absperrventil 80 weist ein Gehäuse 81 und einen Absperr-Ventilkörper 82 auf, der durch einen radial abstehenden Verstellhebel 84 betätigbar ist, um zwischen der Öffnungs- und der Absperrposition bewegt zu werden. Über ein teilringförmig (C-förmig im Querschnitt) ausgebildetes Wasserführungselement 86, das über Schrauben 88 mit dem Gehäuse 14 im Bereich von dessen zweiten und dritten Mischwasserauslässen 70,76 verbunden ist, wird das die Bohrungen 78 des zweiten Mischwasserauslasses 70 verlassende Wasser seitlich an dem Absperrventil 80 und gänzlich getrennt von diesem bis in einen Ringraum 90 oberhalb des Absperrventils 80 geführt, der durch das Aufsatzteil 92 gebildet ist. Das Wasserführungselement 86 weist zu diesem Zweck Wasserführungskanäle 93 auf, die mit den Bohrungen 78 fluchten. Das Wasserführungselement 86 ist von einem Verblendungsring 94 umgeben, in dem konzentrisch ein Innensechskant-Kopplungselement 96 angeordnet ist, das mit einer korrespondierenden Außensechskantfläche 98 des Absperrventils 80 bzw. des Absperr-Ventilkörpers 82 formschlüssig zusammenwirkt. Vom Kopplungselement 96 aus erstreckt sich ein erster Teil des Verstellhebels 84, der den Verblendungsring 94 trägt. Dieser erste Teil 84' ist innerhalb des von dem C-förmigen Wasserführungselement 86 freigelassenen Winkelbereichs W verschwenkbar.

Die zuvor beschriebene Konstruktion gemäß Explosionsdarstellung der Fig. 5 ist im Schnitt nochmals in Fig. 6 gezeigt.

Wie man anhand der Fign. 5 und 6 erkennen kann, erstreckt sich vom dritten Mischwasserauslass 76 des Gehäuses 14 aus zentral durch den das Absperrventil 80 umfassenden Aufbau ein Kanal 99 zur Weiterleitung des bei nicht geschlossenem Absperrventil 80 aus dem dritten Mischwasserauslass 76 austretenden Wassers.

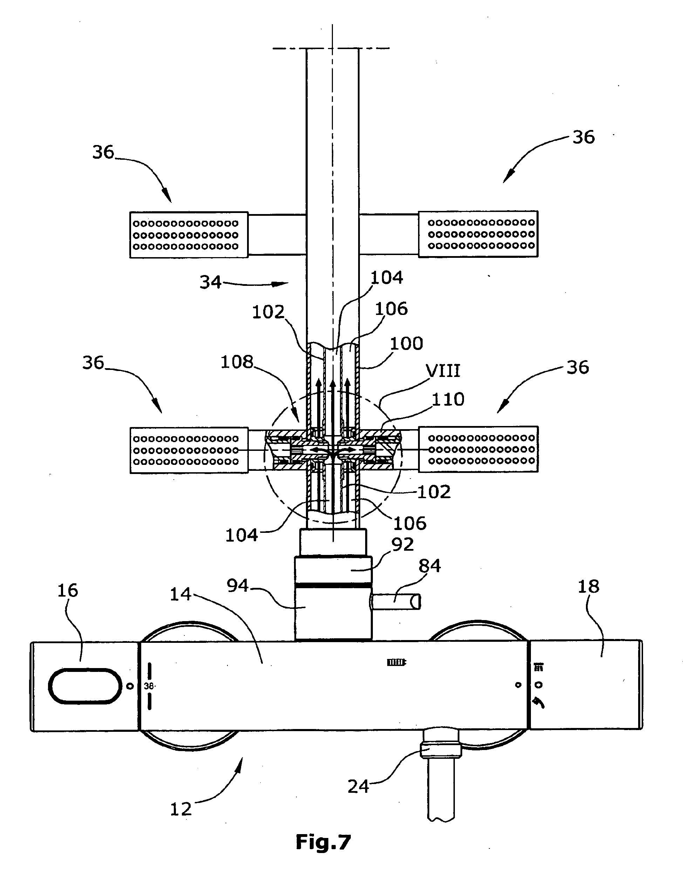

Oberhalb des Absperrventil-Aufbaus des Gehäuses 14 schließt sich, wie auch anhand von Fig. 1 zu erkennen ist, ein Rohrleitungssystem 34 an, dessen Aufbau nachfolgend anhand der Fign. 6 bis 9 kurz erläutert werden soll. Das Rohrleitungssystem 34 ist als Rohr-in-Rohr-System mit einem Außenrohr 100 und einem Innenrohr 102 ausgebildet, die im Wesentlichen konzentrisch zueinander angeordnet sind. Hierdurch entsteht ein innenliegender Kanal 104 und ein außenliegender Ringkanal 106. Der innenliegende Kanal 104 schließt sich an den Kanal 99 an, während der außenliegende Ringkanal 106 in Fluidverbindung mit dem Ringraum 90 steht. Damit gelangt also Wasser aus dem zweiten Mischwasserauslass 70 in den Ringkanal 106, während Wasser aus dem dritten Mischwasserauslass 76 in den innenliegenden Kanal 104 gelangt.

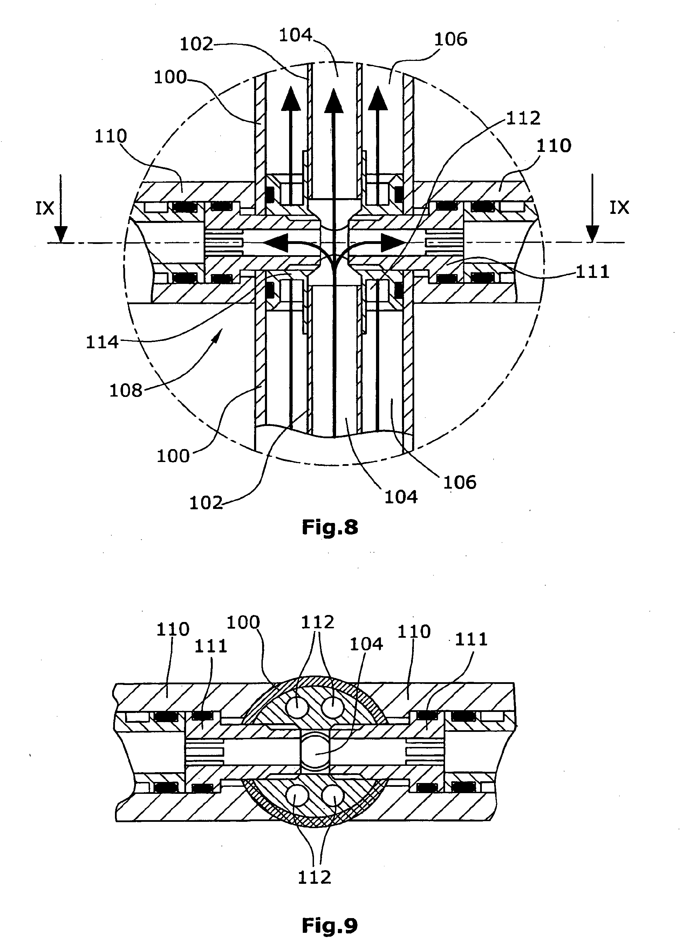

Über spezielle Kreuzungsstücke 108 gelangt das vom innenliegende Kanal 104 geführte Wasser in zwei diametral gegenüberliegende Abzweigleitungen 110, an denen jeweils eine Körperbrause 36 angeschlossen ist, während der Ringkanal 106 an den Abzweigleitungen 110 vorbei bis zur Kopfbrause 35 führt. Die Abzweigleitungen 110 weisen Abzweigstutzen 111 auf, die in Fluidverbindung mit dem innenliegenden Kanal 104 stehen, während der Ringkanal 106 über Überströmkanäle 112 mit dem außenliegenden Ringkanal 106 des oberhalb des Kreuzungsstücks 108 angeordneten Teil des Rohrleitungssystems 34 verbunden ist. Auf den Aufbau des Kreuzungsstücks 108 gemäß den Fign. 8 und 9 soll im Folgenden nicht näher eingegangen werden. Das Kreuzungsstück 108 weist ein zentrales Wasserverteil- und -überströmbauteil 114 auf, an das seitlich über diametral gegenüberliegende Öffnungen die Abzweigleitungen 110 angeschlossen sind und an das sich unterhalb und oberhalb die Rohr-in-RohrLeitungen des Rohrleitungssystems anschließen. Dieses Wasserverteil- und - überströmbauteil 114 wird im Bereich des außenliegenden Ringkanals 106 von in diesem Ausführungsbeispiel vier Überströmkanälen 112 durchzogen, die seitlich an den in das Wasserverteil- und -überströmbauteil 114 bis zum innenliegenden Kanal 104 führenden Abzweigstutzen 111 für die Abzweigleitungen 110 vorbeigeführt sind.

### Bezugszeichenliste

- 10: Brausevorrichtung
- 12: Mischbatterie
- 14: Gehäuse der Mischbatterie
- 16: Betätigungselement der Mischbatterie
- 18: Betätigungselement der Mischbatterie
- 20: Kaltwassereinlass der Mischbatterie
- 22: Heißwassereinlass der Mischbatterie
- 24: erster Mischwasserauslass der Mischbatterie
- 26: Wasserschlauch zur Handbrause
- 28: Handbrause
- 30: Griff der Handbrause
- 32: Brausekopf der Handbrause
- 34: Rohrleitungssystem
- 35: Kopfbrause
- 36: Körperbrause
- 38: Kaltwasserkanal des Gehäuses
- 42: Kaltwassereintrittsöffnung des Mischventils
- 44: Mischventil
- 45: Ventilkörper des Mischventils
- 46: Heißwasserkanal des Gehäuses
- 48: Heißwassereintrittsöffnung des Mischventils
- 50: Mischwasseraustrittsöffnung des Mischventils
- 52: Mischwasserkanal des Gehäuses
- 54: Rohr des Mischwasserkanals
- 56: Rohr des Mischwasserkanals
- 58: Eintrittsöffnung der Mehrwege-Umschalteinheit
- 60: Mehrwege-Umschalteinheit
- 62: Umschalt- und Absperrorgan
- 64: Austrittsöffnungen der Mehrwege-Umschalteinheit
- 66: erster Kanal im Gehäuse
- 68: zweiter Kanal im Gehäuse
- 70: zweiter Mischwasserauslass der Mischbatterie
- 72: Abzweigöffnung des Mischwasserkanals
- 74: dritter Kanal im Gehäuse
- 76: dritter Mischwasserauslass der Mischbatterie
- 78: Bohrungen
- 80: Absperrventil
- 81: Gehäuse des Absperrventils
- 82: Absperr-Ventilkörper des Absperrventils
- 84: Verstellorgan des Absperrventils
- 84': Teil des Verstellorgans
- 86: Wasserführungselement
- 88: Schrauben
- 90: Ringraum des Aufsatzteils
- 92: Aufsatzteil
- 93: Wasserführungskanal durch das Wasserführungselement
- 94: Verblendungsring
- 96: Innensechskant-Kopplungselement
- 98: Außensechskantfläche des Innensechskant-Kopplungselements
- 99: Kanal durch Aufsatzteil und Ringraum
- 100: Außenrohr
- 102: Innenrohr
- 104: innenliegender Kanal
- 106: Ringkanal
- 108: Kreuzungsstück
- 110: Abzweigleitungen zu den Brauseköpfen
- 111: Abzweigstutzen am Kreuzungsstück
- 112: Überströmkanäle im Kreuzungsstück

## Patentansprüche

1. Sanitäre Mischbatterie, insbesondere für eine Brausevorrichtung, mit
- einem Gehäuse (14), das einen Kaltwassereinlass (20), einen Heißwassereinlass (22) und Mischwasserauslässe (24,70) aufweist,
- einem Mischventil (44), das eine in Fluidverbindung mit dem Kaltwassereinlass (20) stehende Kaltwassereintrittsöffnung (42), eine in Fluidverbindung mit dem Heißwassereinlass (22) stehende Heißwassereintrittsöffnung (48), einen Ventilkörper (45) zur Veränderung der Querschnittsflächen der Kalt- und Heißwassereintrittsöffnungen (42,48) zur Erzeugung von Mischwasser und eine Mischwasseraustrittsöffnung (50) aufweist, an die sich ein in dem Gehäuse (14) angeordneter Mischwasserkanal (52) anschließt, und
- einer Mehrwege-Umschalteinheit (60), die eine über den Mischwasserkanal (52) in Fluidverbindung mit der Mischwasseraustrittsöffnung (50) des Mischventils (44) stehende Eintrittsöffnung (58) und Austrittsöffnungen (64), die jeweils mit einem Mischwasserauslass (24,70) des Gehäuses (14) in Fluidverbindung steht, und ein Umschaltorgan (62) zur wahlweisen Fluidverbindung der Eintrittsöffnung (58) mit einer oder mehreren der Austrittsöffnungen (64) der Mehrwege-Umschalteinheit (60) aufweist,
**dadurch gekennzeichnet,**
- **dass** das Gehäuse (14) einen weiteren Mischwasserauslass (76) aufweist,
- **dass** der zwischen der Mischwasseraustrittsöffnung (50) des Mischventils (44) und der Eintrittsöffnung (58) der Mehrwege-Umschalteinheit (60) verlaufende Mischwasserkanal (52) eine Abzweigöffnung (72) aufweist, die in Fluidverbindung mit dem weiteren Mischwasserauslass (76) steht, und
- **dass** ein Absperrventil (80) zum Öffnen und/oder Schließen des weiteren Mischwasserauslasses (76) vorgesehen ist.

2. Sanitäre Mischbatterie nach Anspruch 1, **dadurch gekennzeichnet, dass** einer der über die Mehrwege-Umschalteinheit (60) gesteuerten Mischwasserauslässe (70) ringförmig oder in Form eines Teilrings um den weiteren Mischwasserauslass (76) herum angeordnet ist.

3. Sanitäre Mischbatterie nach Anspruch 1 oder 2, **dadurch gekennzeichnet, dass** einem über die Mehrwege-Umschalteinheit (60) gesteuerten Mischwasserauslass (70) ein Wasserführungselement (86) mit Wasserführungskanal (93) nachgeschaltet ist und dass sich das Wasserführungselement (86) um das Absperrventil (80) für den weiteren Mischwasserauslass (76) oder um ein mit dem Absperrventil (80) in Wirkverbindung stehendes Element zumindest teilweise herum erstreckt.

4. Sanitäre Mischbatterie nach Anspruch 3, **dadurch gekennzeichnet, dass** das Absperrventil (80) ein Gehäuse (81) mit einem Absperr-Ventilkörper (82) und einem manuell betätigbaren Verstellorgan (84) aufweist, das mit dem Absperr-Ventilkörper (82) zwecks Verstellung desselben in Wirkverbindung steht und innerhalb des sich um das Gehäuse (81) des Absperrventils (80) herum erstreckenden, von dem Wasserführungselement (86) frei gelassenen Winkelbereichs (W) radial nach außen erstreckt.

5. Sanitäre Mischbatterie nach Anspruch 4, **dadurch gekennzeichnet, dass** das Verstellorgan einen radial abstehenden Verstellhebel (84) und ein Verblendungselement (94) aufweist, das das Wasserführungselement (86) von außen umgibt.

6. Sanitäre Mischbatterie nach Anspruch 5, **dadurch gekennzeichnet, dass** das Verstellorgan ein innenliegendes polygonales Kopplungselement (96) zur formschlüssigen Verbindung mit einer komplementär ausgebildeten Anlagefläche (98) des Absperr-Ventilkörpers (82) oder eines mit diesem in Wirkverbindung stehenden Bauteils des Absperrventils (80) aufweist.

7. Sanitäre Mischbatterie nach Anspruch 6, **dadurch gekennzeichnet, dass** der Verstellhebel (84) von dem Kopplungselement(96) aus in im Wesentlichen radialer Richtung verläuft und den Verblendungsring (94) trägt.

8. Sanitäre Mischbatterie nach Anspruch 7, **dadurch gekennzeichnet, dass** das Kopplungselement (96) als polygonaler zylindrischer Innenring, insbesondere als Innensechskanthülse ausgebildet ist.

9. Sanitäre Mischbatterie nach einem der Ansprüche 1 bis 8, **dadurch gekennzeichnet, dass** das Mischventil (44) ein Thermostatventil ist.

10. Sanitäre Mischbatterie nach einem der Ansprüche 1 bis 9, **dadurch gekennzeichnet, dass** das Umschaltorgan (62) der Mehrwege-Umschalteinheit (60) in eine Absperrposition überführbar ist, in der die Fluidverbindungen der Eintrittsöffnung (58) zu beiden Austrittsöffnungen (64) versperrt sind.

## Claims

1. Sanitary mixer tap, especially for a shower device, having
- a housing (14), which has a cold-water inlet (20), a hot-water inlet (22) and mixed-water outlets (24, 70),
- a mixing valve (44), which has a cold-water inlet opening (42) in fluidic communication with the cold-water inlet (20), a hot-water inlet opening (48) in fluidic communication with the hot-water inlet (22), a valve body (45) for changing the cross-sectional surface areas of the cold-water and hot-water inlet openings (42, 48) to generate mixed water, and a mixed-water outlet opening (50) which is adjoined by a mixed-water channel (52) arranged in the housing (14), and
- a multi-way switching unit (60) having an inlet opening (58) which, by way of the mixed-water channel (52), is in fluidic communication with the mixed-water outlet opening (50) of the mixing valve (44), and having outlet openings (64) each of which is in fluidic communication with a mixed-water outlet (24, 70) of the housing (14), and having a switching element (62) for fluidically connecting the inlet opening (58) to one or more of the outlet openings (64) of the multi-way switching unit (60) as desired,
**characterised in that**
- the housing (14) has a further mixed-water outlet (76),
- the mixed-water channel (52) running between the mixed-water outlet opening (50) of the mixing valve (44) and the inlet opening (58) of the multi-way switching unit (60) has a branch opening (72) which is in fluidic communication with the further mixed-water outlet (76), and
- a shut-off valve (80) is provided for opening and/or closing the further mixed-water outlet (76).

2. Sanitary mixer tap according to claim 1, **characterised in that** one of the mixed-water outlets (70) controlled by means of the multi-way switching unit (60) is arranged in a ring shape or in the shape of part of a ring around the further mixed-water outlet (76).

3. Sanitary mixer tap according to claim 1 or 2, **characterised in that** downstream of a mixed-water outlet (70) controlled by means of the multi-way switching unit (60) there is arranged a water-conducting element (86) having a water-conducting channel (93), and the water-conducting element (86) extends at least partly around the shut-off valve (80) for the further mixed-water outlet (76) or around an element in operative connection with the shut-off valve (80).

4. Sanitary mixer tap according to claim 3, **characterised in that** the shut-off valve (80) has a housing (81) having a shut-off valve body (82) and a manually operable adjusting element (84) which is in operative connection with the shut-off valve body (82) for the purpose of adjustment thereof and which extends radially outwards within the angular region (W) left free by the water-conducting element (86), which angular region (W) extends around the housing (81) of the shut-off valve (80).

5. Sanitary mixer tap according to claim 4, **characterised in that** the adjusting element has a radially projecting adjusting lever (84) and a facing element (94) which encloses the water-conducting element (86) from the outside.

6. Sanitary mixer tap according to claim 5, **characterised in that** the adjusting element has an internal polygonal coupling element (96) for interlocking connection with a complementarily constructed contact face (98) of the shut-off valve body (82) or of a component of the shut-off valve (80) in operative connection therewith.

7. Sanitary mixer tap according to claim 6, **characterised in that** the adjusting lever (84) extends out from the coupling element (96) in a substantially radial direction and carries the facing ring (94).

8. Sanitary mixer tap according to claim 7, **characterised in that** the coupling element (96) is in the form of a polygonal cylindrical inner ring, especially in the form of an internally hexagonal sleeve.

9. Sanitary mixer tap according to any one of claims 1 to 8, **characterised in that** the mixing valve (44) is a thermostatic valve.

10. Sanitary mixer tap according to any one of claims 1 to 9, **characterised in that** the switching element (62) of the multi-way switching unit (60) is movable into a shut-off position in which the fluidic connections of the inlet opening (58) to the two outlet openings (64) are blocked.

## Revendications

1. Robinetterie mélangeuse sanitaire en particulier destinée à un dispositif de douche comportant :
- un boitier (14) comportant une entrée d'eau froide (20), une entrée d'eau chaude (22) et une sortie d'eau mélangée (24, 70),
- une vanne mélangeuse (44) comportant une ouverture d'entrée d'eau froide (42) en contact fluidique avec l'entrée d'eau froide (20), une ouverture d'entrée d'eau chaude (48) en liaison fluidique avec l'entrée d'eau chaude (22), un corps de vanne (45) permettant de modifier les sections transversales des ouvertures d'entrée d'eau chaude et d'eau froide (42, 48) pour permettre d'obtenir de l'eau mélangée, et une ouverture de sortie d'eau mélangée (50) à laquelle se raccorde un canal d'eau mélangée (52) situé dans le boitier (14),
- une unité de commutation multivoies (60) qui comporte une ouverture d'entrée (58) en contact fluidique par l'intermédiaire du canal d'eau mélangée (52) avec l'ouverture de sortie d'eau mélangée (50) de la vanne mélangeuse (44), et des ouvertures de sortie (64) qui sont respectivement en contact fluidique avec une sortie d'eau mélangée (24, 70) du boitier (14), et un organe de commutation (62) permettant une liaison fluidique sélective de l'ouverture d'entrée (58) avec une ou plusieurs des ouvertures de sortie (64) de l'unité de commutation multivoies (60),
**caractérisée en ce que**
- le boitier (14) comporte une autre sortie d'eau mélangée (76),
- le canal d'eau mélangée (52) s'étendant entre l'ouverture de sortie d'eau mélangée (50) de la vanne mélangeuse (44) et l'ouverture d'entrée (58) de l'unité de commutation multivoies (60) comporte une ouverture de dérivation (72) qui est en liaison fluidique avec l'autre sortie d'eau mélangée (76), et
- il est prévu une soupape d'arrêt (80) pour permettre d'ouvrir et/ou de fermer l'autre sortie d'eau mélangée (76).

2. Robinetterie sanitaire conforme à la revendication 1,
**caractérisée en ce que**
l'une des sorties d'eau mélangée (70) commandée par l'intermédiaire de l'unité de commutation multivoies (60) est située autour de l'autre sortie d'eau mélangée (76) sous forme annulaire ou sous la forme d'un anneau partiel.

3. Robinetterie sanitaire conforme à la revendication 1 ou 2, **caractérisée en ce qu'**
en aval d'une sortie d'eau mélangée (70) commandée par l'unité de commutation multivoies (60) est monté un élément de guidage d'eau (86) équipé d'un canal de guidage d'eau (93), et cet élément de guidage d'eau (86) s'étend au moins en partie autour de la soupape d'arrêt (80) pour l'autre sortie d'eau mélangée (76) ou autour d'un élément en liaison fonctionnelle avec la soupape d'arrêt (80).

4. Robinetterie sanitaire conforme à la revendication 3,
**caractérisée en ce que**
la soupape d'arrêt (80) comporte un boitier (81) équipé d'un corps de soupape d'arrêt (82) et d'un organe de réglage actionnable manuellement (84) qui est en liaison fonctionnelle avec le corps de soupape d'arrêt (82) pour permettre son réglage, et s'étend radialement vers l"extérieur à la partie interne du domaine angulaire (W) s'étendant autour du boitier (81) de la soupape d'arrêt (80) qui est laissé libre par l'élément de guidage d'eau (86).

5. Robinetterie sanitaire conforme à la revendication 4,
**caractérisée en ce que**
l'organe de réglage comporte un levier de réglage (84) s'éloignant radialement et un élément formant écran (94) qui entoure l'élément de guidage d'eau (86) à sa partie externe.

6. Robinetterie sanitaire conforme à la revendication 5,
**caractérisée en ce que**
l'organe de réglage comporte un élément d'accouplement polygonal interne (96) permettant une liaison par la forme avec une surface d'appui complémentaire (98) du corps de soupape d'arrêt (82) ou d'un élément de la soupape d'arrêt (80) en liaison fonctionnelle avec celui-ci.

7. Robinetterie sanitaire conforme à la revendication 6,
**caractérisée en ce que**
le levier de réglage (84) s'étend à partir de l'élément d'accouplement (96) essentiellement en direction radiale et porte la bague formant écran (94).

8. Robinetterie sanitaire conforme à la revendication 7,
**caractérisée en ce que**
l'élément d'accouplement (96) est réalisé sous la forme d'une bague interne cylindrique polygonale en particulier d'un manchon à six pans à sa poche interne.

9. Robinetterie sanitaire conforme à l'une des revendications 1 à 8,
**caractérisée en ce que**
la vanne mélangeuse (44) est une vanne thermostatée.

10. Robinetterie sanitaire conforme à l'une des revendications 1 à 9,
**caractérisée en ce que**
l'organe de commutation (62) de l'unité de commutation multivoies (60) peut être transféré dans une position de blocage dans laquelle les liaison fluidique de l'ouverture d'entrée (58) vers les deux ouvertures de sortie (64) sont bloquées.
